# EUROPÄISCHE PATENTSCHRIFT

(11) **EP 0 689 668 B1**
(45) Veröffentlichungstag und Bekanntmachung des Hinweises auf die Patenterteilung: **21.01.1998**
(21) Anmeldenummer: 94908969.2
(22) Anmeldetag: 09.03.1994
(51) Int. Cl.: G01L 9/06, G01L 13/02

(54) **DRUCKDIFFERENZ-MESSUMFORMER**
PRESSURE DIFFERENCE MEASUREMENT CONVERTER
CONVERTISSEUR DE MESURE DE PRESSION DIFFERENTIELLE

(30) Priorität: 15.03.1993 DE 4308718
(43) Veröffentlichungstag der Anmeldung: 03.01.1996
(73) Patentinhaber: SIEMENS AKTIENGESELLSCHAFT, 80333 München (DE)
(72) Erfinder: THIES, Werner, D-76133 Karlsruhe (DE)
(86) Internationale Anmeldenummer: DE9400262
(87) Internationale Veröffentlichungsnummer: WO9421992

(56) Entgegenhaltungen:
- EP-A- 0 405 633
- DE-A- 2 712 846
- DE-A- 3 437 668
- US-A- 3 780 588
- TECHNISCHES MESSEN TM, Bd.56, Nr.11, November 1989, MUNCHEN DE Seiten 415 - 417, XP000072605 O. EHRMANN U.A. 'TAB-KONTAKTIERUNG FÜR SENSOREN'

## Beschreibung

Die Erfindung bezieht sich auf einen Druckdifferenz-Meßumformer mit einem quer zu seiner Längsachse zweigeteilten Innengehäuse, zwischen dessen beiden Gehäuseteilen eine einen Drucksensor tragende Mittenmembran eingespannt ist und dessen eines Gehäuseteil in einer Bohrung eine elektrische Durchführung enthält, die mit einem äußeren Ansatz in einer Erweiterung der Bohrung liegt.

Bei einem bekannten Druckdifferenz-Meßumformer (US 4 135 408) verläuft die die elektrische Durchführung aufnehmende Bohrung quer zur Längsachse des Meßumformers von außen nach innen. Die Bohrung ist nach außen hin erweitert, so daß die elektrische Durchführung mit einem äußeren Ansatz gegen einen inneren Absatz gedrückt werden kann. Zwischen dem äußeren Ansatz und dem Absatz ist ein O-Ring gelegt, damit eine sichere Abdichtung nach außen vorgenommen wird. Da bei dem bekannten Druckdifferenz-Meßumformer auf die elektrische Durchführung der volle statische Druck im Innern des Meßumformers wirkt, ist gegen den äußeren Ansatz der elektrischen Durchführung eine massive Schraube innerhalb der Bohrung geschraubt.

Der Erfindung liegt die Aufgabe zugrunde, einen Druckdifferenz-Meßumformer vorzuschlagen, der sich hinsichtlich der Anordnung der elektrischen Durchführung verhältnismäßig einfach herstellen läßt.

Zur Lösung dieser Aufgabe verläuft bei einem Druckdifferenz-Meßumformer der eingangs angegebenen Art erfindungsgemäß die Bohrung parallel zur Längsachse und weist an ihrem dem anderen Gehäuseteil zugewandten Ende eine Erweiterung auf; an ihrem von dem anderen Gehäuseteil abgewandten Ende geht die Bohrung in eine nach außen führende Querbohrung über; zwischen dem Drucksensor und der elektrischen Durchführung verläuft eine bandförmige Leiterfolie, die durch eine Abkröpfung neben dem Drucksensor dicht an der Mittenmembran geführt ist und im Bereich der elektrischen Durchführung eine Schlinge bildet.

Es ist zwar aus der DE 34 37 668 A1 eine Meßeinrichtung für Druckmessung mit einer in einer zur Längsachse des Meßumformers parallelen Bohrung untergebrachten elektrischen Durchführung bekannt, die mit einem äußeren Ansatz in einer der Druckbelastung zugewandten Erweiterung der Bohrung liegt, die ihrerseits an ihrer der Druckbelastung abgewandten Seite in eine nach außen führende Querbohrung übergeht, jedoch ist bei dieser Meßeinrichtung kein Sensor an einer Mittenmembran angebracht. Bei der bekannten Einrichtung sind vielmehr ein Druck und ein Druckdifferenz-Sensor parallel zur Längsachse des Meßumformers nebeneinander in einem Innengehäuseteil so befestigt, daß ihre elektrischen Anschlüsse nebeneinander in einer Ebene liegen. Mit ihren elektrischen Anschlüssen sind die Sensoren über jeweils ein Leiterband mit einer ebenfalls achsparallel neben den Sensoren liegenden elektrischen Durchführung verbunden.

Ferner ist es aus der DE 35 00 613 A1 bekannt, eine piezo-resistive Druckmeßzelle hinsichtlich ihrer Bonddrähte unmittelbar mit den Zuleitungen auf einem Kunststoff-Folienmaterialabschnitt zu verbinden, jedoch geht es dort nicht darum, einen fertig hergestellten, mit einer Bondplatte und einem Gehäuse versehenen Drucksensor mit einer elektrischen Durchführung auf einfache Art und Weise zu verbinden.

Ein Vorteil des erfindungsgemäßen Druckdifferenz-Meßumformers besteht darin, daß trotz der Halterung des Drucksensors auf der Mittenmembran durch die Anordnung der Bohrung und ihre Ausgestaltung die elektrische Durchführung mit ihrem äußeren Ansatz durch den statischen Innendruck gegen einen von der Erweiterung der Bohrung gebildeten Ansatz gepreßt wird, wodurch die Druckbeanspruchung der elektrischen Durchführung durch den statischen Innendruck von dem einen Gehäuseteil abgefangen wird. Eine massive Verschraubung zum Abfangen des auf die elektrische Durchführung ausgeübten statischen Druckes ist daher bei dem erfindungsgemäßen Druckdifferenz-Meßumformer nicht erforderlich. Dabei läßt sich durch die Schlinge der bandförmigen Leiterfolie die bandförmige Leiterfolie nach ihrer galvanischen Verbindung mit dem Drucksensor in einfacher Weise auch mit den elektrischen Anschlüssen der elektrischen Durchführung verlöten, weil die Zugänglichkeit zu dieser Lötstelle durch ein Öffnen der Schlinge besonders gut gewährleistet ist.

Die Anordnung der die elektrische Durchführung aufnehmenden Bohrung und die Einbringung der elektrischen Durchführung selbst ermöglichen es bei dem erfindungsgemäßen Druckdifferenz-Meßumformer in vorteilhafter Weise, die elektrische Durchführung im Bereich ihres äußeren Ansatzes mit dem einen Gehäuseteil zu verschweißen. Die Schweißverbindung dient dabei lediglich zur Abdichtung des Innenraumes des erfindungsgemäßen Druckdifferenz-Meßumformers nach außen; Druckbelastungen ist die Schweißstelle nicht ausgesetzt, so daß sie hohen Qualitätsansprüchen nicht genügen muß.

Ein weiterer Vorteil des erfindungsgemäßen Druckdifferenz-Meßumformers wird darin gesehen, daß sich durch Abkröpfung neben dem Drucksensor auf einfache Art Beeinflussungen der Bewegungsfreiheit der Mittenmembran bzw. des auf ihr angebrachten Drucksensors ausschließen lassen.

Zur Erläuterung der Erfindung ist in
- Figur 1: ein Längsschnitt durch ein Ausführungsbeispiel des erfindungsgemäßen Druckdifferenz-Meßumformers und in
- Figur 2: in Form einer Sprengzeichnung der Bereich der Gehäuseteile des Innengehäuses des Druckdifferenz-Meßumformers nach Figur 1 wiedergegeben.

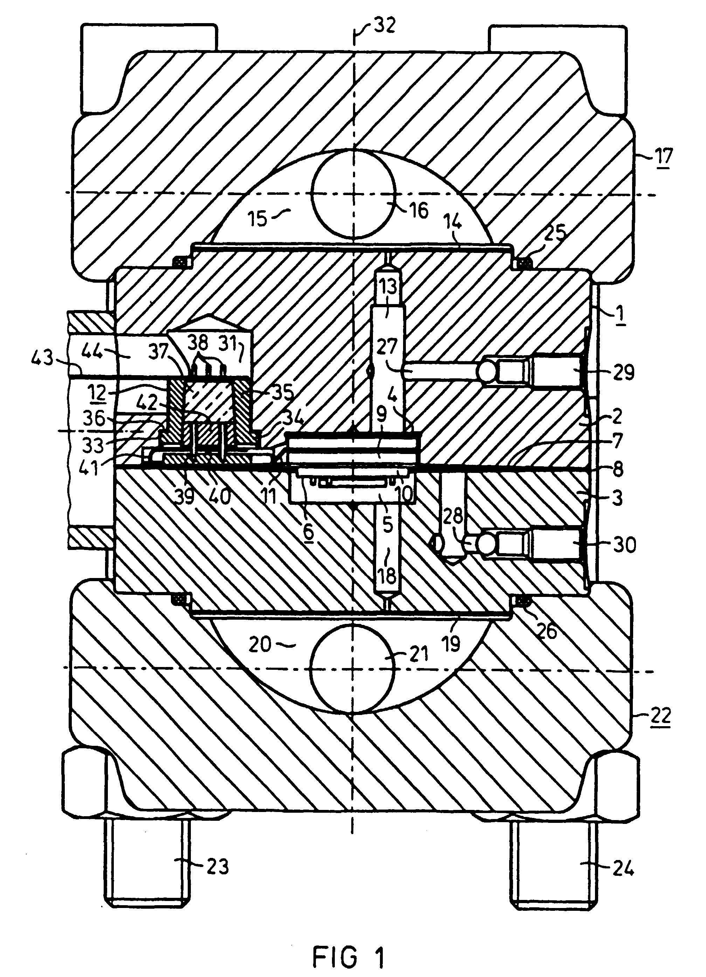

Der in Figur 1 dargestellte Druckdifferenz-Meßumformer weist ein Innengehäuse 1 auf, das ein in der Figur oberes Gehäuseteil 2 und ein anderes (in der Figur unteres) Gehäuseteil 3 enthält. Das eine Gehäuseteil 2 weist eine zentrale Ausnehmung 4 auf; auch das andere Gehäuseteil 3 ist mit einer weiteren zentralen Ausnehmung 5 versehen. In dem von den zentralen Ausnehmungen 4 und 5 gebildeten Hohlraum befindet sich ein Drucksensor 6, der auf einer Mittenmembran 7 befestigt ist. Die Mittenmembran 7 ist zwischen den Gehäuseteilen 2 und 3 des Innengehäuses 1 am äußeren Rand 8 in bekannter Weise durch Schweißen eingespannt.

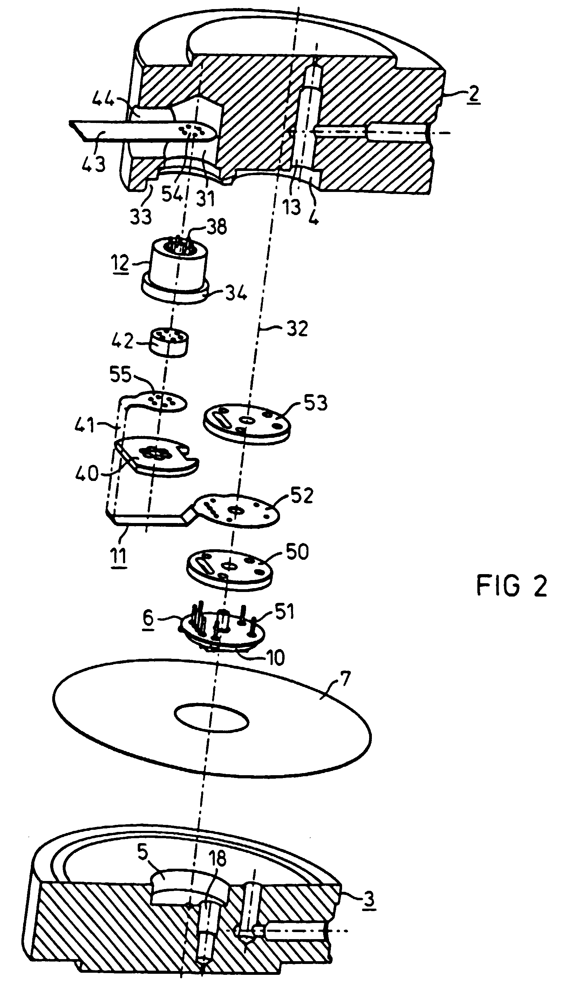

Der Drucksensor 6 kann z.B. im einzelnen so ausgebildet sein, wie es in der Veröffentlichung von G. Ehrler "Piezo-resistive Silizium-Elmentardrucksensoren" AMA-Seminar Mikromechanik, Heidelberg, 14.-15.03.89, S. 81 - 95 beschrieben ist. Der Drucksensor besteht aus einem insofern bekannten Sensorelement 9, und ist in ebenfalls bekannter Weise auf einer Bondplatte 10 aufgebracht. Seine elektrischen Anschlüsse sind - wie später noch im Zusammenhang mit der Figur 2 ausführlich erläutert wird - über eine bandförmige Leiterfolie 11 mit einer elektrischen Durchführung 12 verbunden.

Die zentrale Ausnehmung 4 des einen Gehäuseteils 2 ist über einen inneren Kanal 13 in bekannter Weise über eine Trennmembran 14 mit einer Vorkammer 15 druckleitend verbunden, der über eine Öffnung 16 ein Druck zugeführt wird. Die Vorkammer 15 wird von einer Ausnehmung in einer äußeren Gehäusekappe 17 gebildet.

Entsprechend ist die weitere zentrale Ausnehmung 5 des anderen Gehäuseteils 3 über einen weiteren inneren Kanal 18 und eine weitere Trennmembran 19 druckleitend mit einer weiteren Vorkammer 20 verbunden, in die über eine Öffnung 21 ein weiterer Druck eingeleitet wird. Die Vorkammer 20 ist von einer weiteren Gehäusekappe 22 gebildet, die über Spannschrauben 23 und 24 mit der anderen Gehäusekappe 17 unter Zwischenlegung von 0-Ringen 25 und 26 verspannt ist.

Innerhalb der inneren Kanäle 13 und 18 der beiden Gehäuseteile 2 und 3 befindet sich in bekannter Weise Öl, das über Kanäle 27 und 28 in bekannter Weise eingefüllt wird; diese Kanäle 27 und 28 werden anschließend durch die nur schematisch dargestellten Verschlußeinrichtungen 29 und 30 dicht verschlossen.

Wie die Figur 1 ferner erkennen läßt, weist das eine Gehäuseteil 2 eine Bohrung 31 parallel zur Längsachse 32 des Druckdifferenz-Meßumformers auf. Diese Bohrung 31 ist an ihrem dem anderen Gehäuseteil 3 zugewandten Ende mit einer Erweiterung 33 versehen. Die elektrische Durchführung 12 weist einen entsprechenden Ansatz 34 an einem äußeren Metallzylinder 35 der elektrischen Durchführung 12 auf. Mit dem äußeren Ansatz 34 ist die elektrische Durchführung 12 gegen einen Absatz 36 gedrückt, der von der Erweiterung 33 gebildet ist.

Die elektrische Durchführung 12 enthält in einem Glaskörper 37 eingebettet elektrische Kontaktstifte 38, die auf beiden Seiten aus der elektrischen Durchführung 12 hervorstehen. Deshalb besteht die Möglichkeit, die in der Figur 1 unteren Enden 39 der Kontaktstifte 38 mit der bandförmigen Leiterfolie 11 zu verbinden, die nach Abkröpfung in einer Ebene parallel zur Mittenmembran 7 verläuft und um einen Keramikkörper 40 eine Schlinge 41 bildet, um mit ihrem in Richtung auf den Drucksensor 6 zurückgeführten Ende mit den Kontaktstiften 38 verlötet zu werden. Ein weiteres Keramikstück 42 ist übrigens vorher über die Enden 39 der Kontaktstifte 38 geschoben. An ihrem in der Figur 1 oberen Ende sind die Kontaktstifte 38 ebenfalls mit den Leiterbahnen auf einer weiteren bandförmigen Leiterfolie 43 durch Löten verbunden. Diese weitere bandförmige Leiterfolie ist durch eine Querbohrung 44 nach außen geführt, die sich bis zur Bohrung 31 erstreckt.

Bei dem in Figur 1 dargestellten Druckdifferenz-Meßumformer ist der Raum unterhalb der elektrischen Durchführung 12 mit dem statischen Druck beaufschlagt, der demzufolge auch auf die elektrische Durchführung 12 einwirkt. Die dadurch auf die elektrische Durchführung 12 ausgeübte Belastung wird über den äußeren Ansatz 34 auf das eine Gehäuseteil 2 übertragen, so daß eine einfache Schweißnaht im Bereich des äußeren Ansatzes ausreichend ist, um hier lediglich eine Abdichtung des Innenraumes des Druckdifferenz-Meßumformers nach außen zu bewirken. Weitere Maßnahmen zum Abfangen des statischen Druckes im Bereich der elektrischen Durchführung sind nicht erforderlich.

Der Figur 2, in der mit der Figur 1 übereinstimmende Teile mit gleichen Bezugszeichen versehen sind, ist zu entnehmen, daß mit der Mittenmembran 7 der Drucksensor 6 verbunden ist, nachdem er bereits mit einer Bondplatte 10 versehen ist. Zur Isolation des in der Regel mit einem Metallgehäuse versehenen Drucksensors 6 von der bandförmigen Leiterfolie 11 dient eine Keramikplatte 50, die Ausnehmungen entsprechend der Anordnung der elektrischen Anschlußstifte 51 des Drucksensors 6 aufweist.

Nach dem Verlöten der bandförmigen Leiterfolie 11 in ihrem Bereich 52 mit den Anschlußstiften 51 des Drucksensors 6 wird eine keramische Abdeckplatte 53 aufgebracht, um eine Isolierung des Drucksensors 6 bei starken Auslenkungen der Mittenmembran 7 gegenüber dem einen Gehäuseteil 2 zu erreichen.

Andererseits wird vor einem weiteren Zusammenfügen der Gehäuseteile 2 und 3 des Innengehäuses 1 in die Bohrung 31 des einen Gehäuseteils 2 die elektrische Durchführung 12 eingesetzt, und es werden mit dem Ende 54 der weiteren Leiterfolie 43 die Kontaktstifte 38 verlötet. Anschließend wird das weitere Keramikstück 42 auf die in Figur 2 nicht erkennbaren Enden 39 der Kontaktstifte 38 der elektrischen Durchführung 12 aufgeschoben und danach ein Verlöten des anderen Endes 55 der einen bandförmigen Leiterfolie 11 vorgenommen. Dabei ist die Anbringung so vorgenommen, daß um die Keramikscheibe 40 die Schlinge 41 der bandförmigen Leiterfolie 11 gebildet ist; die Scheibe 40 dient dabei dazu, ein Knicken der bandförmigen Leiterfolie 11 im Bereich der Schlinge zu verhindern.

Ist die Montage so weit fortgeschritten, dann können die Gehäuseteile 2 und 3 des Innengehäuses unter Einspannen der Mittenmembran 7 mit dem Drucksensor 6 durch Schweißen verbunden werden.

## Patentansprüche

1. Druckdifferenz-Meßumformer mit einem quer zu seiner Längsachse zweigeteilten Innengehäuse (1), zwischen dessen beiden Gehäuseteilen (2,3) eine einen Drucksensor (6) tragende Mittenmembran (7) eingespannt ist und dessen eines Gehäuseteil (2) in einer Bohrung (31) eine elektrische Durchführung (12) enthält, die mit einem äußeren Ansatz (34) in einer Erweiterung (33) der Bohrung liegt,
**dadurch gekennzeichnet**
daß die Bohrung (31) parallel zur Längsachse (32) verläuft, daß die Bohrung (31) an ihrem dem anderen Gehäuseteil (3) zugewandten Ende die Erweiterung (33) aufweist und an ihrem von dem anderen Gehäuseteil (3) abgewandten Ende in eine nach außen führende Querbohrung (44) übergeht, daß zwischen dem Drucksensor (6) und der elektrischen Durchführung (12) eine bandförmige Leiterfolie (12) verläuft, daß die bandförmige Leiterfolie (11) durch eine Abkröpfung neben dem Drucksensor (6) dicht an der Mittenmembran (7) geführt ist und daß die bandförmige Leiterfolie (11) im Bereich der elektrischen Durchführung (12) eine Schlinge (4) bildet.

2. Druckdifferenz-Meßumformer nach Anspruch 1,
**dadurch gekennzeichnet**
daß die elektrische Durchführung (12) im Bereich ihres äußeren Ansatzes (34) mit dem einen Gehäuseteil (2) verschweißt ist.

## Claims

1. Pressure difference measuring transducer having an inner housing (1) that is divided into two transversely relative to its longitudinal axis and clamped between the two housing portions (2, 3) of which there is a central diaphragm (7) bearing a pressure sensor (6) and the one housing portion (2) of which contains in a bore (31) an electrical bushing (12), an outer projection (34) of which lies in an extension (33) of the bore, characterised in that the bore (31) extends so as to be parallel to the longitudinal axis (32), in that the bore (31) has the extension (33) at its end that faces the other housing portion (3) and, at its end that is remote from the other housing portion (3), changes into a transverse bore (44) which leads to the outside, in that extending between the pressure sensor (6) and the electrical bushing (12) there is a band-shaped foil conductor (12 - sic), in that the band-shaped foil conductor (11) is guided by means of an offset formation next to the pressure sensor (6) close to the central diaphragm (7), and in that the band-shaped foil conductor (11) forms a loop (4 - sic) in the region of the electrical bushing (12).

2. Pressure difference measuring transducer according to claim 1, characterised in that the electrical bushing (12) in the region of its outer projection (34) is welded together with the one housing portion (2).

## Revendications

1. Transducteur de mesure de différence de pression comportant un boîtier (1) intérieur qui est divisé en deux parties transversalement à son axe longitudinal, entre les deux parties (2, 3) de boîtier duquel est tendue une membrane (7) médiane portant un capteur (6) de pression et dont l'une (2) des parties de boîtier comporte dans un perçage (31) une traversée (12) électrique, qui est placée par un épaulement (34) extérieur dans un élargissement (33) du perçage,
caractérisé en ce que
le perçage (31) s'étend parallèlement à l'axe (32) longitudinal, en ce que le perçage (31) comporte l'élargissement (33) à son extrémité tournée vers l'autre partie (3) du boîtier et devient, à son extrémité éloignée de l'autre partie (3) du boîtier, un perçage (44) transversal allant à l'extérieur, en ce qu'un ruban (11) conducteur en forme de bande s'étend entre le capteur (6) de pression et la traversée (12) électrique, en ce que le ruban (11) conducteur en forme de bande va, par un coude situé à côté du capteur (6) de pression, tout près de la membrane (7) médiane et en ce que le ruban (11) conducteur en forme de bande forme une boucle (4) dans la zone de la traversée (12) électrique.

2. Transducteur de mesure de différence de pression suivant la revendication 1,
caractérisé en ce que
la traversée (12) électrique est, dans la zone de son épaulement (34) extérieur, soudée à l'une (2) des parties du boîtier.
